(19) Europäisches Patentamt
European Patent Office
Office européen des brevets

(11) **EP 1 836 074 B1**

(12) **EUROPÄISCHE PATENTSCHRIFT**

(45) Veröffentlichungstag und Bekanntmachung des Hinweises auf die Patenterteilung:
**22.02.2012 Patentblatt 2012/08**

(21) Anmeldenummer: **05797286.1**

(22) Anmeldetag: **19.10.2005**

(51) Int Cl.:
**B60R 21/34** $^{(2011.01)}$   **B60R 21/01** $^{(2006.01)}$

(86) Internationale Anmeldenummer:
**PCT/EP2005/055359**

(87) Internationale Veröffentlichungsnummer:
**WO 2006/072480 (13.07.2006 Gazette 2006/28)**

(54) **VERFAHREN ZUR OFFSETERKENNUNG FÜR EINE FUSSGÄNGERSCHUTZVORRICHTUNG**

OFFSET RECOGNITION METHOD FOR A PEDESTRIAN PROTECTION DEVICE

PROCEDE DE RECONNAISSANCE AVANCEE POUR DISPOSITIF DE PROTECTION DES PIETONS

(84) Benannte Vertragsstaaten:
**DE ES FR GB**

(30) Priorität: **04.01.2005 DE 102005000657**

(43) Veröffentlichungstag der Anmeldung:
**26.09.2007 Patentblatt 2007/39**

(73) Patentinhaber: **ROBERT BOSCH GMBH**
**70442 Stuttgart (DE)**

(72) Erfinder: **MACK, Frank**
**70376 Stuttgart (DE)**

(56) Entgegenhaltungen:
**WO-A-2004/058545     DE-A1- 10 321 209**
**US-A1- 2004 064 230**

EP 1 836 074 B1

Printed by Jouve, 75001 PARIS (FR)

**Beschreibung**

Stand der Technik

Die Erfindung geht aus von einem Verfahren zur Offseterkennung für eine Fußgängerschutzvorrichtung nach der Gattung des unabhängigen Patentanspruchs 1. 1m Zusammenhang mit der vorliegenden Erfindung wird der Abstand eines Auftreffpunktes eines Objektes zu einer Fahrzeugmittelachsc als Offset bezeichnet,

Durch die Ankündigung der Einführung eines EU-Gesetzes zur Reduzierung von Verletzungen eines Fußgängers bei einem Zusammenstoß zwischen einem Fußgänger und einem Fahrzeug, müssen neue Fahrzeug so konstruiert werden, dass die Verletzungen des Fußgängers bei einer Kollision innerhalb der in diesem EU-Gesetz geforderten Grenzen bleiben.

Eine erste Strategie zur Reduzierung von Verletzungen von Fußgängern zielt darauf ab, durch Änderungen an der Stoßstange und am Design des Fahrzeuges eine Knautschzone für den Fußgänger zu schaffen, um somit durch eine passive Lösung die Verletzungsgefahr zu reduzieren.

Eine zweite Strategie versucht durch eine geeignete Sensorik den Aufprall eines Fußgängers zu erkennen und durch anschließendes aktives Ansteuern einer Fußgängerschutzvorrichtung wie beispielsweise von Außenairbags an den A-Säulen und/oder durch Anheben der Motorhaube, die benötigte Knautschzone zu schaffen. Bei der aktiven Lösung können die verschiedensten Sensorprinzipien von Beschleunigungs-, Druck-, Klopf-, piezoclektrischen bis optischen Sensoren etc. benutzt werden.

In der Offenlegungsschrift DE 103 21 209 A1 wird beispielsweise eine Anprallsensoranordnung zur Erfassung einer Kollision eines Fahrzeugs mit einem Objekt beschrieben. Die beschriebene Anprallsensoranordnung kann für eine Fußgängerschulzvorrichtung verwendet werden und weist einen Hohlkörper auf, welcher durch ein mit dem Fahrzeug kollidierendes Objekt verformbar ist und in dem durch den Anprall eine Druckwelle erzeugbar ist, welche von mindestens einem Drucksensor erfasst und zur Bestimmung eines Auftreffpunktes des Objekts ausgewertet wird. Zur Offsetbestimmung des Auftreffpunktes des Objekts wird mit Sensordaten von mindestens zwei Drucksensoren eine Merkmalsextraktion durchgeführt. Hierbei wird vorgeschlagen, die Laufzeitunterschiede zwischen den von den mindestens zwei Drucksensoren erfassen Druckwellen zu Ermittlung der lateralen Position des Anpralls auszuwerten, da die erzeugten Drackwellen bei den Drucksensoren zeitliche versetzt ankommt.

In der internationalen Patentanmeldung WO 2004/058545 A1 wird eine Anprallsensoranordnung zur Erfassung einer Kollision eines Fahrzeugs mit einem Objekt für eine Fußgängerschutzvorrichtung beschrieben. Zur Bestimmung eines Auftreffpunktes des Objekts mit dem Fahrzeug wird mit Sensordaten von mindestens zwei Sensoren eine Merkmalsextraktion durchgeführt. Hierbei wird vorgeschlagen, eine Summe von Messwerten zu bilden und basierend auf der Summe der Messwerte und einem bekannten Abstand der beiden Sensoren zueinander den Auftreffpunkt des Objekts zu ermitteln.

In der Offenlegungsschrift US 2004/0064230 A1 wird eine Fußgängerschutzvorrichtung für ein Fahrzeug beschrieben. Die beschriebene Fußgängerschutzvorrichtung führt zur Bestimmung eines Auftreffpunktes eines Objekts mit dem Fahrzeug eine Merkmalsextraktion mit zwei Signalspannungen durch. Hierbei wird vorgeschlagen, eine aus den Signalspannungen eine Differenzspannung zu bilden und basierend auf der Differenzspannung den Auftreffpunkt des Objekts zu ermitteln.

Diese drei Dokumente offenbart dem Oberbegriff des Anspruchs 1.

Vorteile der Erfindung

Das erfindungsgemäße Verfahren zur Offseterkennung für eine Fußgängerschutzvorrichtung mit den Merkmalen des unabhängigen Patentanspruchs 1 hat demgegenüber den Vorteil, dass durch eine Merkmalsextraktion aus den Sensordaten von mindestens zwei Sensoren bei einer Kollision mit einem Objekt eine robuste Offseterkennung ermöglicht wird. Zudem wird in vorteilhafter Weise eine Aussage darüber ermöglicht, ob der Aufprall mit einem großen Offset, d.h. mit einem großen Abstand zur Fahrzeugmittelachse, oder mit einem geringeren Offset, d.h. mit einem geringen Abstand zur Hahrzeugmittelachse, erfolgt ist.

Ein erstes Merkmal zur Offsetbestimmung wird erfindungsgemäß aus einem Vergleich des Differenzsignals und des Summensignals der Sensordaten der mindestens zwei Sensoren extrahiert. Die Sensordaten sind bei einer symmetrischen Anordnung der beiden Sensoren zur Fahrzeugmittelachse bei einem Aufprall ohne Offset praktisch identisch. Das bedeulel, dass das Differenzsignal zwischen den Sensordaten der mindestens zwei Sensoren praktisch null ist, während das Summensignal aus den beiden Sensordaten große Werte annimmt. Bei einem kleinen Offset schwingen die Sensordaten der mindestens zwei Sensoren gegenphasig. Das bedeutet, dass das Differenzsignal groß ist, während sich das Summensignal fast zu null auslöscht. Im Falle eines großen Offsets detektiert einer der mindestens zwei Sensoren deutlich größere Sensordaten als der andere der mindestens zwei Sensoren, wobei die Phasenbezichung zwischen den beiden Sensordaten so ist, dass das Differenzsignal ungefähr so groß wie das Summensignal ist.

Ausgehend von diesen Eigenschaften ermöglichen das Summensignal und das Differenzsignal der Sensordaten der mindestens zwei Sensoren in vorteilhafter Weise eine Aussage über den Offset eines Objektaufpralls.

Durch das erfindungsgemäße Verfahren wird eine genauere und robustere Erkennung des Auftreffpunktes eines Fußgängers oder einer Person auf den Stoßfänger in y-Richtung ermöglicht Dies führt dazu, dass eine sichere und robustere Ansteuerung der Schutzmittel für Fußgänger möglich wird, indem z.B. die Auslöseschwellen je nach Auftreffpunkt unterschiedlich gewählt werden, und somit eine genauere Unterscheidung der Fußgänger von anderen Objekten möglich wird. Dadurch wird das Schutzpotenzial für die Fußgänger bei gleichzeitiger Minimierung der Kosten erhöht, welche durch eine ungewollte Auslösung der Fußgängerschutzvorrichtung, beispielsweise bei Kollisionen mit anderen Objekten, entstehen können. Außerdem wird verhindert, dass der Fahrer durch eine Auslösung, z.B. Aufstellung der Motorhaube, irritiert und in seinem Lenkverhalten beeinträchtigt wird.

Durch die in den abhängigen Ansprüchen aufgeführte Maßnahmen und Weiterbildungen sind vorteilhafte Verbesserungen des im unabhängigen Patentanspruch 1 angegebenen Verfahrens zur Offseterkennung für eine Fußgängerschutzvorrichtung möglich.

Besonders vorteilhaft ist, dass Fahrzeugdaten, welche vorzugsweise von einem Fahrzeugbussystem zur Verfügung gestellt werden, zur Merkmalsextraktion verwendet werden, wobei die Fahrzeugdaten eine Fahrzeugeigengeschwindigkeit und/oder eine Gierrate und/oder eine Relativgeschwindigkeit zwischen dem Fahrzeug und einem Objekt umfassen, Die Relativgeschwindigkeit kann beispielsweise von einer Radarsensorik, einer Ultraschallsensorik, einem Videosystem usw. ermittelt werden. In Kenntnis der Fahrzeugeigengeschwindigkeit oder der Relativgeschwindigkeit können beispielsweise Zeitpunkte und Zeitintervalle für die Offseterkennung genauer bestimmt werden. Die Kenntnis der Gierrate kann bei einem Schleudervorgang eine Information über die vermutliche Kontaktseite liefern.

Besonders vorteilhaft ist es, wenn vor dem Signalvergleich jeweils die Absolutwerte des Differenzsignals und des Summensignals gebildet und über die Zeit aufsummiert werden, wobei für den Signalvergleich beispielsweise das Verhältnis aus dem Absolutwert des Differenzsignals und dem Absolutwert des Summensignals gebildet wird. Dadurch ergeben sich robustere Werte für die Offseterkennung.

Zur Extrahierung eines zweiten Merkmals werden jeweils die Absolutwerte der Sensordaten der mindestens zwei Sensoren aufsummiert. Anschließend werden der Maximalwert und der Minimalwert der aufsummierten Absolutwerte ermittelt und miteinander verglichen. Aus dem Vergleich der Absolutwerte der Sensordaten der mindestens zwei symmetrisch zur Fahrzeugmittelachse angeordneten Sensoren kann auf einfache Weise erkannt werden, oh der Aufprall auf der rechten oder der linken Fahrzeugseite erfolgt ist. Diese Information der Kontaktseite kann ebenfalls der Entscidungslogik für Fußgängerschutzmittel zur Verfügung gestellt werden. So können bestimmte Rückhaltemittel, z.B. Airbags in der A-Säule, nur auf einer Fahrzeugseite aktiviert werden bzw, ihre Aktivierung kann auf den beiden Fahrzeugseiten unterschiedlich stark erfolgen.

Zur Bildung des zweiten Merkmals wird beispielsweise das Verhältnis aus dem ermittelten Maximalwert und dem ermittelten Minimalwert gebildet, von welchem für eine bessere Darstellbarkeit der Wert 1 subtrahiert wird.

Zum Ausgleich einer unsymmetrischen Fronstruktur des Fahrzeugs und/oder einer unsymmetrischen Anordnung der mindestens zwei Sensoren zur Fahrzeuglängsachse werden in vorteilhafter Weise Kompensationsfaktoren verwendet. Die jeweiligen Sensordaten der mindestens zwei Sensoren werden dann mit unterschiedlichen Kompensationsfaktoren multipliziert, so dass im Fall eines Aufpralls ohne Offset die Größe der mindestens zwei Sensordaten nach der Kompensation gleich groß sind.

Zur Offsetbestimmung können das erste Merkmal und/oder das zweite Merkmal zu mindestens einem vorgegebenen Zeitpunkt ausgewertet werden. Durch die Vorgabe von entsprechenden Zeitpunkten können die beiden Merkmale zum gleichen Zeitpunkt oder zu unterschiedlichen Zeitpunkten ausgewertet werden. Zudem ermöglicht die Vorgabe des Auswertezeitpunktes in vorteilhafter Weise, dass die Merkmale zu einem optimalen Zeitpunkt ausgewertet werden.

Zusätzlich oder alternativ können zur Offsetbestimmung ein Mittelwert des ersten Merkmals und/oder ein Mittelwert des zweiten Merkmals innerhalb mindestens eines vorgegebenen Zeitintervalls ausgewertet werden. Die Auswertung der Mittelwerte der beiden Merkmale kann im gleichen Zeitintervall oder in verschiedenen Zeitintervallen erfolgen.

In vorteilhafter Weise kann der Auswertezeitpunkt und/oder das Auswertezeitintervall zur Offsetbestimmung in Abhängigkeit von Fahrzeugdaten festgelegt werden, welche vorzugsweise über ein Bussystem zur Verfügung gestellt werden. Dadurch kann das Verfahren zu Offsetbestimmung optimal in ein Auslöseverfahren der Fußgängerschutzvorrichtung eingebunden werden und die erforderliche Information über den Offset zu einem passenden Zeitpunkt zur Verfügung stellen.

In vorteilhafter Weise kann ein durch das erste und zweite Merkmal gebildeter Merkmalsraum durch verschiedene Schwellen in mehrere Gebiete aufgeteilt werden, vorzugsweise in drei oder fünf Gebiete. Zur Offsetbestimmung wird dann überprüft, ob das erste und zweite Merkmal in einem der mehreren Gebiete angeordnet ist. Ist dies der Fall, dann wird der dem Gebiet zugeordnete Wert als Offset ausgegeben.

Ist das erste und zweite Merkmal in keinem der mehreren Gebiete angeordnet, dann wird eine unplausible Situation erkannt und für die Offsetbestimmung wird ein Defaultwert verwendet.

In vorteilhafter Weise können für eine noch genauere und robustere Offseterkennung noch weitere Merkmale zur Offsetbestimmung aus Fahrzeugdaten und/oder aus einem zeitlichen Abstand und/oder einem Vorzeichen der Maximalwerte und/oder Minimalwerte der Sensordaten der mindestens zwei Sensoren gebildet werden. Durch die Berücksichtigung der Vorzeichen der Sensordaten der mindestens zwei Sensoren kann die Erkennung der Kontaktseite verbessert werden.

In vorteilhafter Weise können Fußgängerschutzmittel in Abhängigkeit vom ermittelten Offsetwert nur auf einer Fahrzeugseite oder auf den beiden Fahrzeugseiten unterschiedlich stark ausgelöst werden.

Zusätzlich zur Verbesserung der Fußgängersensierung kann dass hier beschriebene Verfahren zur Offseterkennung auch für eine verbesserte Fahrzeugcrashsensierung benutzt werden, wenn Beschleunigungssensoren im Fahrzeugstoßfänger verbaut werden. Besonders vorteilhaft ist es, wenn dieselben Beschleunigungssensoren für den Fußgängerschutz und für eine verbesserte Fahrzeugcrasherkennung eingesetzt werden.

Zeichnung

Ein Ausführungsbeispiel der Erfindung ist in der Zeichnung dargestellt und wird in der nachfolgenden Beschreibung näher erläutert.

Es zeigen

Figur 1    ein schematisches Blockdiagramm einer Vorrichtung zur Offseterkennung,
Figur 2    eine schematische Darstellung von Sensorsignalverläufen bei einem Aufprall eines Objekts mit einer Geschwindigkeit von 20km/h ohne Offset,
Figur 3    eine schematische Darstellung von Sensorsignalverläufen bei einem Aufprall eines Objekts mit einer Geschwindigkeit von 20km/h mit einem geringen Offset (200mm),
Figur 4    eine schematische Darstellung von Sensorsignalverläufen bei einem Aufprall eines Objekts mit einer Geschwindigkeit von 20km/h mit einem großen Offset (500mm),
Figur 5    eine schematischer Verlauf eines Merkmals Diff_Sum_Ratio über die Zeit für verschiedene Offsets bei einem Aufprall des Objekts mit einer Geschwindigkeit von 20km/h
Figur 6    eine schematischer Verlauf eines Merkmals Max_Min_Ratio über die Zeit für verschiedene Offsets bei einem Aufprall des Objekts mit einer Geschwindigkeit von 20km/h,
Figur 7    eine schematische Darstellung eines Merkmalsraums der Merkmale Diff_Sum_Ratio und Max_Min_Ratio mit drei verschiedenen Gebieten, und
Figur 8    eine schematische Darstellung des Merkmalsraums der Merkmale Diff_Sum_Ratio und Max_Min_Ratio mit fünf verschiedenen Gebieten.

Beschreibung

Bei Verfahren zur Auslösung von Fußgängerschutzsystemen können die verschiedensten Sensorprinzipien von Beschleunigungs-, Druck-, Klopf-, piezoelektrischen bis optischen Sensoren etc. benutzt werden. Die Beschleunigungssensoren haben hierbei den Vorteil, dass sie auch als Upfrontsensoren mitbenutzt werden können. Die Beschleunigungssensoren werden dabei an Stellen, beispielsweise am Kühlerträger oder am Stoßfänger eingebaut, und sensieren in x-Richtung. Zudem ist bereits ein Verfahren bzw. ein Algorithmuskonzept vorgeschlagen worden, welches anhand von Eingangssignalen, vorzugsweise Beschleunigungssignalen, eine Auslöseentscheidung für Fußgängerschutzmittel trifft. Im vorgeschlagenen Algorithmuskonzept ist auch ein Block Offseterkennung enthalten, welcher durch einen Vergleich der Signale von einem rechtem und einem linkem Sensor ermittelt, ob ein Aufprall zentral oder versetzt zur Mitte der Fahrzeugfront, d.h. mit einem Offset, erfolgt ist. Diese Offsetinformation führt dann zu unterschiedlichen Auslöseschwelle für die verschiedenen Merkmale, je nachdem ob ein Offset erkannt wurde oder nicht.

Erfindungsgemäß wird ein Verfahren zur Offseterkennung vorgeschlagen, welches bei einer Kollision mit einem Objekt mit den Sensordaten von mindestens zwei Sensoren eine Merkmalsextraktion zur Offsetbestimmung des Auftreffpunktes durchführt, wobei bei der Merkmalsextraktion Absolutwerte und/oder Differenzwerte und/oder Summenwerte und/oder Maximalwerte und/oder Minimalwerte der Sensordaten der mindestens zwei Sensoren bestimmt werden. In Weiterbildungen können Fahrzeugdaten, welche vorzugsweise von einem Fahrzeugbussystcm zur Verfügung gestellt werden, zur Merkmalsextraktion verwendet werden, wobei die Fahrzeugdaten eine Fahrzeugeigengeschwindigkeit und/oder eine Gierrate und/oder eine Relativgeschwindigkeit zu einem bestimmten Objekt umfassen können.

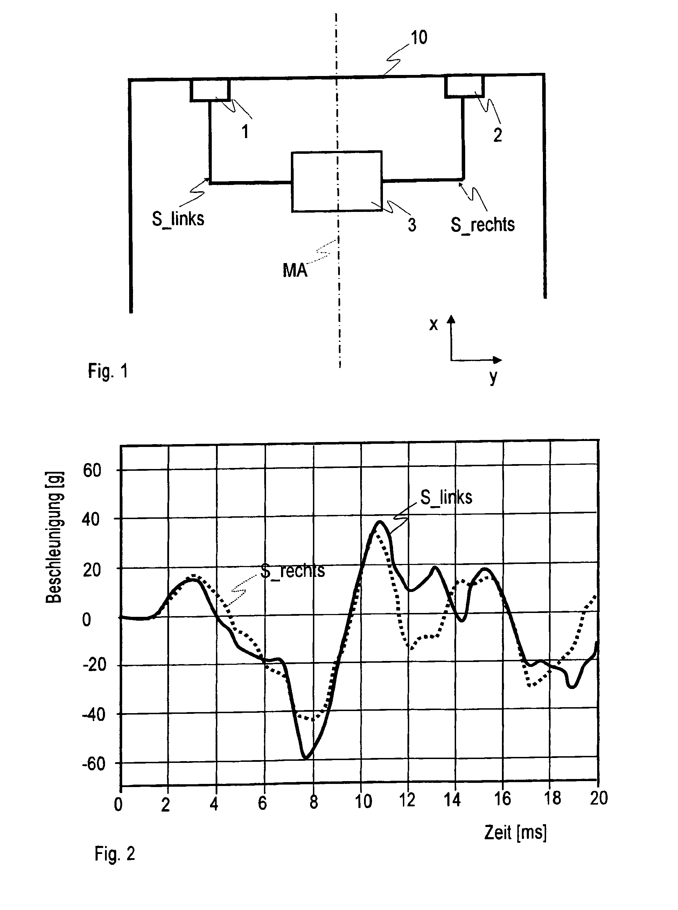

Figur 1 zeigt eine Vorrichtung, die das erfindungsgemäße Verfahren zur Offseterkennung verwendet. Wie aus Figur 1 ersichtlich ist, umfasst das dargestellte Ausführungsbeispiel der Vorrichtung eine Auswerte- und Steuereinheit 3, welche die Sensordaten S_links und S_rechts von zwei symmetrisch zu einer Fahrzeugmittelachse MA an der Fahrzeugfront 10 angeordneten Sensoren 1 und 2 zur Offseterkennung auswertet, wobei der Sensor 1 links von der Fahrzeugmittelachse MA und der Sensor 2 rechts von der Fahrzeugmittelachse angeordnet ist. Die Auswerte- und Steuereinheit 3 stellt den ermittelten Offset einem Verfahren oder einer Vorrichtung zur Auslösung einer Fußgängerschutzvorrichtung zur Verfügung, welche in Abhängigkeit von der Offseterkennung bestimmte Fußgängerschutzmittel, wie z.B. Airbags in der A-Säule, nur auf einer Fahrzeugseite aktivieren bzw. auf den beiden Seiten des Fahrzeugs unterschiedlich stark aktivieren. Die Erfindung wird nachfolgend unter Bezugnahme auf die Figuren 1 bis 8 an einem System mit zwei Beschleunigungssensoren 1, 2 beschrieben. Das Verfahren kann in derselben oder einer leicht modifizierten Form aber auch auf andere Sensoren wie z.B. Klopfsensoren angewandt werden. Außerdem ist eine Erweiterung der Vorrichtung auf mehr als zwei Sensoren möglich.

Figur 2 zeigt eine schematische Darstellung des Signalverlaufs der Sensordaten S_links und S_rechts bei einem Aufprall eines Objekts mit einer Geschwindigkeit von 20km/h ohne Offset. Wie aus Figur 2 ersichtlich ist, sind die Sensordaten S_links und S_rechts des rechten und des linken Sensors 1, 2 bei einem Aufprall ohne Offset praktisch identisch. Dass heißt, dass das aus den Sensordaten S_links und S_rechts gebildete Differenzsignal praktisch null ist, während das Summesignal aus den beiden Signalen S_links und S_rechts große Werte annimmt.

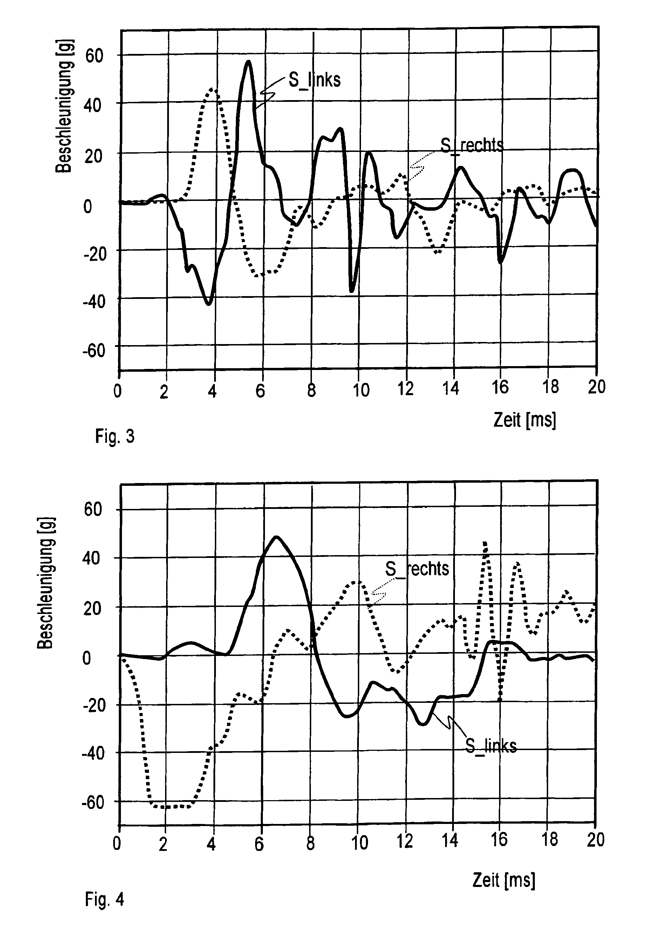

Figur 3 zeigt eine schematische Darstellung des Signalverlaufs der Sensordaten S_links und S_rechts bei einem Aufprall eines Objekts mit einer Geschwindigkeit von 20km/h mit einem geringen Offset von beispielsweise y=200mm. Wie aus Figur 3 ersichtlich ist, schwingen die Sensordaten S_links und S_rechts bei einem Offset von y=200mm gegenphasig. Dass heißt, dass das aus den Sensordaten S_links und S_rechts gebildete Differenzsignal groß ist, während sich das Summensignal fast zu null auslöscht.

Figur 4 zeigt eine schematische Darstellung des Signalverlaufs der Sensordaten S_links und S_rechts bei einem Aufprall eines Objekts mit einer Geschwindigkeit von 20km/h mit einem großen Offset von beispielsweise y=500mm. Im Falle des Aufpralls mit einem Offset von y=500mm., findet bei dem dargestellten Ausführungsbeispiel der Aufprall in der Nähe des rechten Beschleunigungssensors 2 statt, welcher ca. 580mm entfernt von der Fahrzeugmittelachse MA verbaut ist. Wie aus Figur 4 ersichtlich ist, detektiert der rechte Sensor 2 deutlich größere Signaldaten als der linke Sensor 1. Die Phase der Signaldaten S_rechts und S_links ist so, dass das Differenzsignal aus den beiden Sensordaten S_links und S_rechts ungefähr so groß wie das Summensignal ist.

Ausgehend von diesen Signaleigenschaften vergleicht ein erstes Merkmal Diff_Sum_Ratio für die Offseterkennung das Differenzsignal und das Summensignal aus den beiden Signaldaten S_links und S_rechts. Das beschriebene Ausführungsbeispiel bildet in vorteilhafter Weise das Differenzsignal und das Summensignal jeweils aus den Absolutwerten der beiden Sensordaten S_links und S_rechts, welche über die Zeit aufsummiert werden. Dadurch ergeben sich robustere Werte. Das erste Merkmal Diff_Sum_Ratio wird dann beispielsweise durch eine Division des Differenzsignals durch das Summensignal gebildet. Gleichung 1 zeigt die Bestimmung des Differenzsignals, Gleichung 2 zeigt die Bestimmung des Summensignals und Gleichung 3 zeigt die Bestimmung des ersten Merkmals Diff_Sum_Ratio.

$$\mathrm{Diff\_Abs\_Int} = \int \left| S\_links - S\_rechts \right| \qquad (1)$$

$$\mathrm{Sum\_Abs\_Int} = \int \left| S\_links + S\_rechts \right| \qquad (2)$$

$$\mathrm{Diff\_Sum\_Ratio} = \frac{Diff\_Abs\_Int}{Sum\_Abs\_Int} \qquad (3)$$

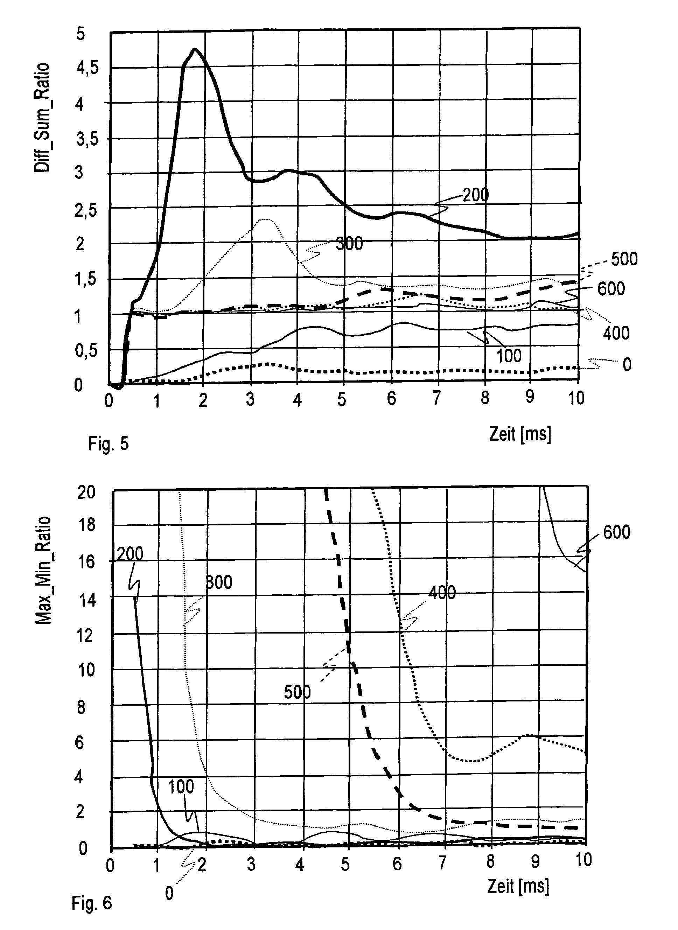

Die Summation beginnt, wenn der Fußgängerschutzalgorithmus seine Berechnungen startet. Dies geschieht üblicherweise, wenn die gemessene Beschleunigung bzw. Verzögerung eine bestimmte Rauschschwelle überschreitet. Figur 5 zeigt das erste Merkmal Diff_Sum_Ratio für verschiedene Fälle. Es werden Kennlinien des ersten Merkmals Diff_Sum_Ratio in Abhängigkeit von der Zeit für verschiedene Offsets zwischen 0 bis 600mm dargestellt, wobei die Kennlinien erst nach Überschreiten der Rausschwelle dargestellt sind. Wie aus Fig. 5 ersichtlich ist, können die Werte des ersten Merkmals Diff_Sum_Ratio für die verschiedenen Offsetwerte zu einem vorgegebenen Zeitpunkt nach Algorithmusstart, z.B. 4ms, unterschieden werden.

Zur Bildung eines zweiten Merkmals Max_Min_Ratio wird jeweils der Absolutwert der rechten Sensordaten S_rechts und der linken Sensordaten S_links aufsummiert. Danach wird der größere der beiden Werte mit dem kleineren Wert verglichen. Detektieren beide Sensoren 1, 2 ein Signal mit derselben Größenordnung, dann ergibt der Vergleich einen Wert 1. Sonst ergibt der Vergleich größere Werte als 1. Für den Signalvergleich kann beispielsweise das Verhältnis der beiden Werte gebildet werden, wobei zur Erzeugung des zweiten Merkmals Max_Min_Ratio von dem ermittelten Quotienten noch der Wert 1 abgezogen wird. Gleichung 4 zeigt die Bestimmung des Absolutwertes der rechten Sensordaten S_rechts und Gleichung 5 zeigt die Bestimmung des Absolutwertes der linken Sensordaten S_links. Gleichung 6 zeigt die Bestimmung des Maximalwertes Max_Abs_Int der beiden Absolutwerte Right_Abs_Int und Left_Abs_Int und Gleichung 7 zeigt die Bestimmung des Minimalwertes Min_Abs_Int der beiden Absolutwerte Right_Abs_Int und Left_Abs_Int. Gleichung 8 zeigt die Bestimmung des zweiten Merkmals Max_Min_Ratio.

$$\text{Right\_Abs\_Int} = \int |S\_rechts| \qquad (4)$$

$$\text{Left\_Abs\_Int} = \int |S\_links| \qquad (5)$$

$$\text{Max\_Abs\_Int} = \max(Right\_Abs\_Int, Left\_Abs\_Int) \qquad (6)$$

$$\text{Min\_Abs\_Int} = \min(Right\_Abs\_Int, Left\_Abs\_Int) \qquad (7)$$

$$\text{Max\_Min\_Ratio} = \frac{Max\_Abs\_Int}{Min\_Abs\_Int} - 1 \qquad (8)$$

Figur 6 zeigt Kennlinien des zweiten Merkmals Max_Min_Ratio für verschiedene Fälle mit Offsets zwischen 0 und 600mm in Abhängigkeit von der Zeit nach dem der Algorithmus gestartet wurde. Wie aus Fig. 6 ersichtlich ist, können durch die Werte des zweiten Merkmals Max_Min_Ratio die verschiedenen Offsetwerte in Verbindung mit dem ersten Merkmal Diff_Sum_Ratio zu einem bestimmten Zeitpunkt nach Algorithmusstart, z.B. 4ms, unterschieden werden.

Aus dem Vergleich der beiden Absolutwerte Right_Abs_Int und Left_Abs_Int der beiden Sensordaten S_rechts und S_links kann auf einfache Weise erkannt werden, ob der Aufprall auf der rechten oder der linken Fahrzeugseite erfolgt ist. Die Information der Kontaktseite kann ebenfalls der Entscheidungslogik für Fußgängerschutzmittel zur Verfügung gestellt werden. Dadurch können bestimmte Fußgängerschutzmittel, wie z.B. Airbags in der A-Säule, nur auf einer Fahrzeugseite aktiviert werden bzw. ihre Aktivierung kann auf den beiden Seiten des Fahrzeugs unterschiedlich stark erfolgen.

Weist das Fahrzeug im Gegensatz zum dargestellten Ausführungsbeispiel eine unsymmetrische Frontstruktur auf oder sind die mindestens zwei Sensoren 1, 2 nicht symmetrisch zur Fahrzeugmittelachse MA angeordnet, dann können die bisher beschriebene Merkmale trotzdem verwendet werden, wenn man die jeweiligen Sensordaten S_links und S_rechts mit unterschiedlichen Kompensationsfaktoren für rechts und links multipliziert, so dass im Fall eines Aufpralls ohne Offset die Größe der rechten und linken Sensordaten S_links und S_rechts nach der Kompensation wieder gleich groß sind.

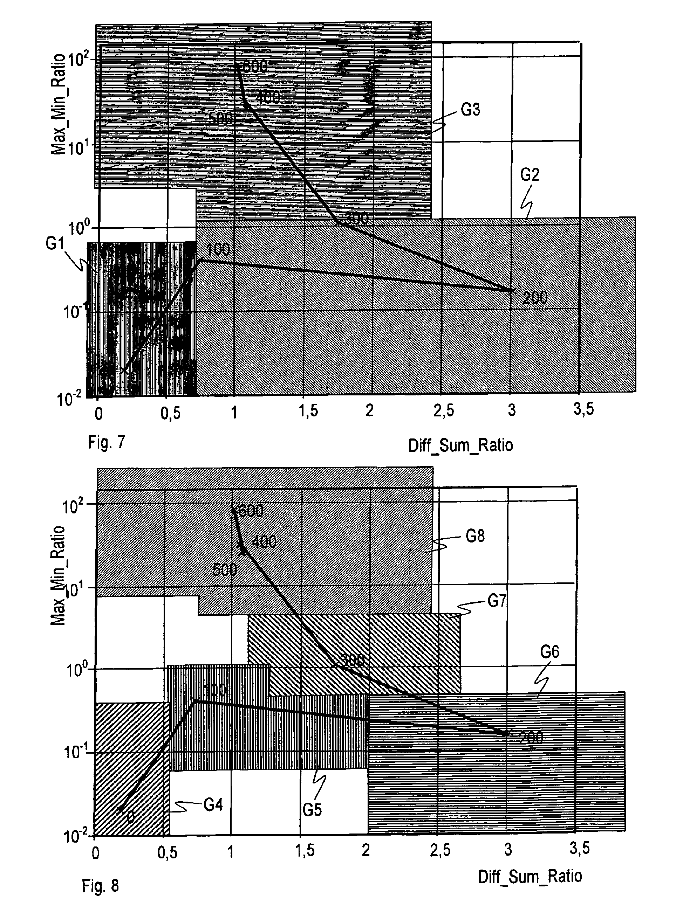

Die Auswerte- und Steuereinheit 3 wertet die beiden Merkmale Diff_Sum_Ratio und Max_Min_Ratio zu einem bestimmten Zeitpunkt aus, beispielsweise 4ms nach Algorithmusstart Zur Offseterkennung wird durch einen Vergleich mit verschiedenen Schwellen, geprüft, in welchem Gebiet eines Merkmalsraums sich der vorliegende Aufprall befindet. Eine Aufteilung des Merkmalraums in drei Gebieten G1, G2 und G3 ist in Figur 7 dargestellt, wobei das Gebiet G1 den Offset 0 repräsentiert, das Gebiet G2 den Offset 200mm und das Gebiet G3 den Offset 500mm repräsentiert. Die eingezeichnete Kurve zeigt die Offset-Entscheidung mit den Werten der beiden Merkmale Diff_Sum_Ratio und Max_Min_Ratio, welche diese zum Zeitpunkt 4ms nach Algorithmusstart angenommen haben. Liegen die Merkmale Diff_Sum_Ratio und Max_Min_Ratio in keinem der eingezeichneten Gebiete G 1 bis G3, so liegt eine unplausible Situation vor, und es wird ein Default-Wert für die Offseterkennung verwendet.

Es kann auch eine feinere Einteilung der verschiedenen Offsetsituationen vorgenommen werden, in dem der Merkmalsraum in mehr als drei Gebiete G1 bis G3 unterteilt wird. Fig. 8 zeigt den Fall mit fünf Gebieten G4 bis G8, wobei das Gebiet G4 den Offset 0 repräsentiert, das Gebiet G5 den Offset 100mm, das Gebiet G6 den Offset 200mm, das Gebiet G7 den Offset 300mm und das Gebiet G8 den Offset 500mm repräsentiert.

Alternativ können die beiden Merkmale Diff_Sum_Ratio und Max_Min_Ratio auch zu verschiedenen Zeitpunkten ausgewertet werden. So kann beispielsweise das erste Merkmal Diff_Sum_Ratio nach 4ms und das zweite Merkmal Max_Min_Ratio nach 6ms ausgewertet werden. Anstelle der Auswertung der Merkmale Diff_Sum_Ratio und Max_Min_Ratio, zu einem bestimmten Zeitpunkt nach Algorithmusstart, kann auch der Mittelwert der Merkmale Diff_Sum_Ratio und Max_Min_Ratio in einem bestimmten Zeitintervall zu einer Entscheidung verwendet werden. Es ist auch denkbar die Offseterkennung nur mit einem der beiden Merkmale Diff_Sum_Ratio und Max_Min_Ratio alleine durchzuführen, oder die beiden Merkmale Diff_Sum_Ratio und Max_Min_Ratio auf eine andere Art als die beschriebene zu kombinieren. Ferner kann der Zeitpunkt bzw. das Zeitintervall, welches für die Offseterkennung verwendet wird, in Abhängigkeit von Fahrzeugdaten vorgegeben werden, beispielsweise in Abhängigkeit von der Fahrzeugeigengeschwindigkeit und/oder der Relativgeschwindigkeit zu einem bestimmten Objekt, welche beispielsweise über den CAN-Bus zur Verfügung gestellt werden.

Zusätzlich können noch weitere Merkmale zur noch genaueren bzw. robusteren Offseterkennung mit den hier beschriebenen Merkmalen Diff_Sum_Ratio und Max_Min_Ratio kombiniert werden. So kann beispielsweise der zeitliche Abstand der maximalen Verzögerungspeaks und/oder Beschleunigungspeaks in die Entscheidung mit einbezogen werden, oder zur Plausibilisierung verwendet werden. Wie aus den Figuren 2 bis 4 ersichtlich ist, ist beispielsweise der zeitliche Abstand zwischen den Verzögerungspeaks der rechten Sensordaten S_rechts und der linken Sensordaten S_links im Fall ohne Offset ca. 0ms, bei einem Offset von 200mm ca. 2ms und bei einem Offset von 500mm ca. 7ms.

Zusätzlich kann die Offset-Entscheidung noch verbessert werden, wenn das Vorzeichen des ersten Beschleunigungspeaks der beiden Sensordaten S_links, S_rechts mit berücksichtigt wird. Wie aus Figur 2 ersichtlich ist, ist das Vorzeichen der ersten Beschleunigungspeaks der beiden Sensordaten S_links, S_rechts bei einem Offset von y=0 bei beiden Sensoren 1, 2 positiv, während bei einem vorhandenen Offset das eine Vorzeichen positiv und das andere Vorzeichen negativ ist, wie aus den Figuren 3 und 4 ersichtlich ist.

Durch einen Vergleich dieser Vorzeichen kann auch die Erkennung der Kontaktseite verbessert werden, dies ist besonders im dem Fall hilfreich wenn die Signale gegenphasig schwingen, wie in Fig. 3 dargestellt ist.

Bezugszeichenliste

| | |
|---|---|
| 0 | Merkmalskennlinie für ein Offset von 0 |
| 1 | linker Sensor |
| 2 | rechter Sensor |
| 3 | Auswerte- und Steuereinheit |
| 10 | Fahrzeugfront |
| 100 | Merkmalskennlinie für ein Offset von 100mm |
| 200 | Merkmalskennlinie für ein Offset von 200mm |
| 300 | Merkmalskennlinie für ein Offset von 300mm |
| 400 | Merkmalskennlinie für ein Offsets von 400mm |
| 500 | Merkmalskennlinie für ein Offset von 500mm |
| 600 | Merkmalskennlinie für ein Offset von 600mm |
| MA | Fahrzeugmittelachse |
| S_rechts | rechte Sensordaten |
| S_links | linke Sensordaten |
| G1 bis G8 | Gebiete im Merkmalsraum |
| Diff_Sum_Ratio | erstes Merkmal |
| Max_Min_Ratio | zweites Merkmal |

**Patentansprüche**

1. Verfahren zur Offseterkennung für eine Fußgängerschutzvorrichtung, bei welchem Sensordaten ermittelt und zur Bestimmung eines Auftreffpunktes eines Objekts ausgewertet werden, wobei bei einer Kollision mit einem Objekt mit den Sensordaten (S_rechts, S_links) von mindestens zwei Sensoren (1, 2) eine Merkmalsextraktion zur Offsetbestimmung des Auftreffpunktes durchgeführt wird, **dadurch gekennzeichnet, dass** bei der Merkmalsextraktion ein erstes Merkmal (Diff_Sum_Ratio) zur Offsetbestimmung aus einem Vergleich eines Differenzsignals und eines Summensignals der Sensordaten (S_rechts, S_links) der mindestens zwei Sensoren (1, 2) extrahiert wird.

**2.** Verfahren nach Anspruch 1, **dadurch gekennzeichnet, dass** Fahrzeugdaten, welche vorzugsweise von einem Fahrzeugbussystem zur Verfügung gestellt werden, zur Merkmalsextraktion verwendet werden, wobei die Fahrzeugdaten eine Fahrzeugeigengeschwindigkeit und/oder eine Gierrate und/oder eine Relativgeschwindigkeit umfassen.

**3.** Verfahren nach Anspruch 1 oder 2, **dadurch gekennzeichnet, dass** vor dem Signalvergleich jeweils die Absolutwerte des Differenzsignals und des Summensignals gebildet und über die Zeit aufsummiert werden, wobei für den Signalvergleich das Verhältnis aus dem Absolutwert des Differenzsignals und dem Absolutwert des Summensignals gebildet wird.

**4.** Verfahren nach einem der Ansprüche 1 bis 3, **dadurch gekennzeichnet, dass** zur Extrahierung eines zweiten Merkmals (Max_Min_Ratio) jeweils die Absolutwerte der Sensordaten (S_rechts, S_links) der mindestens zwei Sensoren (1, 2) aufsummiert werden, der Maximalwert und der Minimalwert der aufsummierten Absolutwerte ermittelt und mit einander verglichen werden.

**5.** Verfahren nach Anspruch 4, **dadurch gekennzeichnet, dass** für den Signalvergleich das Verhältnis aus dem ermittelten Maximalwert und dem ermittelten Minimalwert gebildet wird, von welchem zur Bildung des zweiten Merkmals (Max_Min_Ratio) der Wert 1 subtrahiert wird.

**6.** Verfahren nach einem der Ansprüche 1 bis 5, **dadurch gekennzeichnet, dass** zum Ausgleich einer unsymmetrischen Fronstruktur (10) des Fahrzeugs und/oder einer unsymmetrischen Anordnung der mindestens zwei Sensoren (1, 2) zur Fahrzeuglängsachse (MA) Kompensationsfaktoren verwendet werden.

**7.** Verfahren nach einem der Ansprüche 4 bis 6, **dadurch gekennzeichnet, dass** zur Offsetbestimmung das erste Merkmal (Diff_Sum_Ratio) und/oder das zweite Merkmal (Max_Min_Ratio) zu mindestens einem vorgegebenen Zeitpunkt ausgewertet werden.

**8.** Verfahren nach einem der Ansprüche 4 bis 7, **dadurch gekennzeichnet, dass** zur Offsetbestimmung ein Mittelwert des ersten Merkmals (Diff_Sum_Ratio) und/oder des zweiten Merkmals (Max_Min_Ratio) innerhalb mindestens eines vorgegebenen Zeitintervalls ausgewertet werden.

**9.** Verfahren nach Anspruch 7 oder 8, **dadurch gekennzeichnet, dass** der Auswertezeitpunkt und/oder das Auswertezeitintervall zur Offsetbestimmung in Abhängigkeit von Fahrzeugdaten festgelegt werden, welche vorzugsweise über ein Bussystem zur Verfügung gestellt werden.

**10.** Verfahren nach einem der Ansprüche 4 bis 9, **dadurch gekennzeichnet, dass** zur Offsetbestimmung ein durch das erste und zweite Merkmal (Diff_Sum_Ratio, Max_Min_Ratio) gebildeter Merkmalsraum durch verschiedene Schwellen in mehrere Gebiete (G1 bis G3, G4 bis G8) aufgeteilt wird, vorzugsweise drei oder fünf Gebiete (G1 bis G3, G4 bis G8), und überprüft wird, ob das erste Merkmal (Diff_Sum_Ratio) und das zweite Merkmal (Max_Min_Ratio) in einem der mehreren Gebiete (G1 bis G3, G4 bis G8)) angeordnet sind.

**11.** Verfahren nach Anspruch 10, **dadurch gekennzeichnet, dass** eine unplausible Situation erkannt und für die Offsetbestimmung ein Defaultwert verwendet wird, wenn das erste Merkmal (Diff_Sum_Ratio) und das zweite Merkmal (Max_Min_Ratio) in keinem der mehreren Gebiete (G1 bis G3, G4 bis G8) angeordnet sind.

**12.** Verfahren nach einem der Ansprüche 1 bis 11, **dadurch gekennzeichnet, dass** weitere Merkmale zur Offsetbestimmung aus Fahrzeugdaten und/oder aus einem zeitlichen Abstand und/oder einem Vorzeichen der Maximalwerte und/oder Minimalwerte der Sensordaten (S_rechts, S_links) der mindestens zwei Sensoren (1, 2) gebildet werden.

**13.** Verfahren nach einem der Ansprüche 1 bis 12, **dadurch gekennzeichnet, dass** Fußgängerschutzmittel in Abhängigkeit vom ermittelten Offsetwert nur auf einer Fahrzeugseite oder auf den beiden Fahrzeugseiten unterschiedlich stark ausgelöst werden.

**Claims**

**1.** Method for offset detection for a pedestrian protection device, in which sensor data are determined and are evaluated in order to determine an impact point of an object,

wherein, in the event of a collision with an object, a feature extraction for the purpose of offset determination of the impact point is carried out with the sensor data (S_rechts, S_links) of at least two sensors (1, 2),
**characterized in that**
during the feature extraction a first feature (Diff_Sum_Ratio) for offset determination is extracted from a comparison of a difference signal and of a sum signal of the sensor data (S_rechts, S_links) of the at least two sensors (1, 2).

2. Method according to Claim 1, **characterized in that** vehicle data which are preferably made available by a vehicle bus system are used for feature extraction, wherein the vehicle data comprise an inherent vehicle speed and/or a yaw rate and/or a relative speed.

3. Method according to Claim 1 or 2, **characterized in that** before the signal comparison the absolute values of the difference signal and of the sum signal are respectively formed and are summed over time, wherein the ratio between the absolute value of the difference signal and the absolute value of the sum signal is formed for the signal comparison.

4. Method according to one of Claims 1 to 3, **characterized in that** in order to extract a second feature (Max_Min_Ratio) the absolute values of the sensor data (S_rechts, S_links) of the at least two sensors (1, 2) are respectively summed, and the maximum value and the minimum value of the summed absolute values are respectively determined and compared with one another.

5. Method according to Claim 4, **characterized in that** the ratio between the determined maximum value and the determined minimum value is formed for the signal comparison and the value 1 is subtracted therefrom in order to form the second feature (Max_Min_Ratio).

6. Method according to one of Claims 1 to 5, **characterized in that** compensation factors are used to compensate for an asymmetrical front structure (10) of the vehicle and/or an asymmetrical arrangement of the at least two sensors (1, 2) with respect to the longitudinal axis (MA) of the vehicle.

7. Method according to one of Claims 4 to 6, **characterized in that** for the offset determination the first feature (Diff_Sum_Ratio) and/or the second feature (Max_Min_Ratio) are evaluated at at least one predefined time.

8. Method according to one of Claims 4 to 7, **characterized in that** for the purpose of offset determination a mean value of the first feature (Diff_Sum_Ratio) and/or of the second feature (Max_Min_Ratio) are evaluated within a predefined time interval.

9. Method according to Claim 7 or 8, **characterized in that** for the purpose of offset determination the evaluation time and/or the evaluation time interval are defined as a function of vehicle data which are preferably made available via a bus system.

10. Method according to one of Claims 4 to 9, **characterized in that** for the purpose of offset determination a feature space which is formed by the first and second features (Diff_Sum_Ratio, Max_Min_Ratio) is divided by various thresholds into a plurality of regions (G1 to G3, G4 to G8), preferably three or five regions (G1 to G3, G4 to G8) and it is checked whether the first feature (Diff_Sum_Ratio) and the second feature (Max_Min_Ratio) are arranged in one of the plurality of regions (G1 to G3, G4 to G8).

11. Method according to Claim 10, **characterized in that** an implausible situation is detected and a default value is used for the offset determination if the first feature (Diff_Sum_Ratio) and the second feature (Max_Min_Ratio) are not arranged in any of the plurality of regions (G1 to G3, G4 to G8).

12. Method according to one of Claims 1 to 11, **characterized in that** further features for the offset determination are formed from vehicle data and/or from a chronological interval and/or a sign of the maximum values and/or minimum values of the sensor data (S_rechts, S_links) of the at least two sensors (1, 2).

13. Method according to one of Claims 1 to 12, **characterized in that** pedestrian protection means are triggered to different degrees as a function of the determined offset value on only one side of the vehicle or on both sides of the vehicle.

**Revendications**

1. Procédé de détection de décalage pour un dispositif de protection des piétons, selon lequel des données de capteur sont déterminées puis interprétées pour déterminer un point d'impact d'un objet,
une extraction de caractéristiques étant effectuée en cas de collision avec un objet avec les données de capteur (S_rechts, S_links) d'au moins deux capteurs (1, 2) pour déterminer le décalage du point d'impact, **caractérisé en ce que**
lors de l'extraction de caractéristiques, une première caractéristique (Diff_Sum_Ratio) est extraite pour déterminer le décalage à partir d'une comparaison d'un signal différentiel et d'un signal total des données de capteur (S_rechts, S_links) des au moins deux capteurs (1, 2).

2. Procédé selon la revendication 1, **caractérisé en ce que** des données de véhicule qui sont de préférence mises à disposition par un système de bus de véhicule sont utilisées pour l'extraction de caractéristiques, les données de véhicule comprenant une vitesse propre du véhicule et/ou un taux de lacet et/ou une vitesse relative.

3. Procédé selon la revendication 1 ou 2, **caractérisé en ce qu'**avant la comparaison des signaux, les valeurs absolues du signal différentiel et du signal total sont respectivement calculées et additionnées en fonction du temps, le rapport entre la valeur absolue du signal différentiel et la valeur absolue du signal total étant calculé pour la comparaison des signaux.

4. Procédé selon l'une des revendications 1 à 3, **caractérisé en ce que** pour extraire une deuxième caractéristique (Max_Min_Ratio), les valeurs absolues des données de capteur (S_rechts, S_links) des au moins deux capteurs (1, 2) sont respectivement additionnées, la valeur maximale et la valeur minimale des valeurs absolues additionnées sont déterminées et comparées entre elles.

5. Procédé selon la revendication 4, **caractérisé en ce que** pour la comparaison des signaux, le rapport entre la valeur maximale déterminée et la valeur minimale déterminée est calculé, puis la valeur 1 en est déduite pour former la deuxième caractéristique (Max_Min_Ratio).

6. Procédé selon l'une des revendications 1 à 5, **caractérisé en ce que** des facteurs de compensation sont utilisés pour compenser une structure frontale (10) asymétrique du véhicule et/ou un arrangement asymétrique des au moins deux capteurs (1, 2) par rapport à l'axe longitudinal du véhicule (MA).

7. Procédé selon l'une des revendications 4 à 6, **caractérisé en ce que** pour déterminer le décalage, la première caractéristique (Diff_Sum_Ratio) et/ou la deuxième caractéristique (Max_Min_Ratio) sont interprétées à au moins un instant prédéfini.

8. Procédé selon l'une des revendications 4 à 7, **caractérisé en ce que** pour déterminer le décalage, une valeur moyenne de la première caractéristique (Diff_Sum_Ratio) et/ou de la deuxième caractéristique (Max_Min_Ratio) sont interprétées à l'intérieur d'au moins un intervalle de temps prédéfini.

9. Procédé selon la revendication 7 ou 8, **caractérisé en ce que** l'instant d'interprétation et/ou l'intervalle de temps d'interprétation pour déterminer le décalage sont fixés en fonction de données du véhicule, lesquelles sont de préférence mises à disposition par le biais d'un système de bus.

10. Procédé selon l'une des revendications 4 à 9, **caractérisé en ce que** pour déterminer le décalage, un espace de caractéristiques formé par la première et la deuxième caractéristique (Diff_Sum_Ratio, Max_Min_Ratio) est divisé par différents seuils en plusieurs régions (G1 à G3, G4 à G8), de préférence trois ou cinq régions (G1 à G3, G4 à G8), et un contrôle est effectué pour vérifier si la première caractéristique (Diff_Sum_Ratio) et la deuxième caractéristique (Max_Min_Ratio) sont disposées dans l'une des plusieurs régions (G1 à G3, G4 à G8).

11. Procédé selon la revendication 10, **caractérisé en ce qu'**une situation non plausible est identifiée et une valeur par défaut est utilisée pour la détermination du décalage si la première caractéristique (Diff_Sum_Ratio) et la deuxième caractéristique (Max_Min_Ratio) ne sont disposées dans aucune des plusieurs régions (G1 à G3, G4 à G8).

12. Procédé selon l'une des revendications 1 à 11, **caractérisé en ce que** des caractéristiques supplémentaires sont formées pour déterminer le décalage à partir de données du véhicule et/ou à partir d'un écart dans le temps et/ou d'un signe des valeurs maximales et/ou des valeurs minimales des données de capteur (S_rechts, S_links) des au moins deux capteurs (1, 2).

13. Procédé selon l'une des revendications 1 à 12, **caractérisé en ce que** des dispositifs de protection des piétons, suivant la valeur de décalage déterminée, ne sont déclenchés que d'un côté du véhicule ou sur les deux côtés du véhicule avec une puissance différente.

Fig. 1

Fig. 2

Fig. 3

Fig. 4

Fig. 5

Fig. 6

Fig. 7

Fig. 8

**EP 1 836 074 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10321209 A1
- WO 2004058545 A1
- US 20040064230 A1